# EUROPEAN PATENT SPECIFICATION

(11) **EP 3 830 563 B1**
(45) Date of publication and mention of the grant of the patent: **07.06.2023**
(21) Application number: 19742456.7
(22) Date of filing: 17.07.2019
(51) Int. Cl.: G01N 29/04, G01N 29/06, G01N 29/26, G01N 29/265, G01N 29/30, B64F 5/60

(54) **NON-DESTRUCTIVE TESTING USING PHASED ARRAYS**
ZERSTÖRUNGSFREIE PRÜFUNG MITTELS GRUPPENSTRAHLERN
ESSAI NON DESTRUCTIF UTILISANT DES RÉSEAUX EN PHASE

(30) Priority: 03.08.2018 GB 201812633; 03.08.2018 EP 18275111
(43) Date of publication of application: 09.06.2021
(73) Proprietor: BAE SYSTEMS plc, London SW1Y 5AD (GB)
(72) Inventor: PYE, Andrew Joseph, Preston Lancashire PR4 1AX (GB)
(74) Representative: BAE SYSTEMS plc Group IP Department
(86) International application number: PCT/GB2019/051998
(87) International publication number: WO 2020/025927

(56) References cited:
- US-A1- 2004 020 296
- US-A1- 2017 038 341
- D Hopkins ET AL: "ADVANCED PHASED-ARRAY TECHNOLOGIES FOR ULTRASONIC INSPECTION OF COMPLEX COMPOSITE PARTS", International Workshop SMART MATERIALS, STRUCTURES & NDT in AEROSPACE, 1 November 2011 (2011-11-01), pages 1-10, XP055168929, Retrieved from the Internet: URL:http://www.ndt.net/article/ndtcanada20 11/papers/109_Hopkins.pdf [retrieved on 2015-02-11]
- ALDRIN JOHN ET AL: "Scattering of obliquely incident shear waves from a cylindrical cavity", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 129, no. 6, 1 June 2011 (2011-06-01), pages 3661-3675, XP012136594, ISSN: 0001-4966, DOI: 10.1121/1.3583540

## Description

### Field

The present invention relates to non-destructive testing, particularly phased array ultrasonic scanning.

### Background to the invention

Non-destructive testing (NDT), also known as non-destructive examination (NDE), non-destructive inspection (NDI) and non-destructive evaluation (NDE), is the development and application of technical methods (also known as techniques) to examine materials and/or articles, for example components, in ways that do not impair future usefulness and serviceability in order to detect, locate, measure, and evaluate flaws; to assess integrity, properties, and composition; and to measure geometrical characters. Typical NDT techniques include eddy-current, magnetic-particle, liquid penetrant, radiographic, ultrasonic, and visual testing. NDT is typically used to determine indications, discontinuities, flaws and/or defects in the materials and/or the articles.

Aldrin John et al.: "Scattering of obliquely incident shear waves from a cylindrical cavity", J. Ac. Soc.Am., vol. 129, no. 6, 1 June 2011, pages 3661-3675, discloses the evaluation of scattering of obliquely incident shear waves from a cylindrical cavity using phased arrays.

NOT is typically applied in industries where failure of the materials and/or the articles would cause significant hazard or economic loss, such as in transportation including aerospace, pressure vessels, building structures, piping, and hoisting equipment. In use, the materials and/or the articles are typically subject to loads that may result in at least initiation of failure, for example crack formation and/or growth thereof. Fatigue may occur due to repeated (typically cyclic) loading and unloading. If the loading is above a threshold, microscopic cracks begin to form at stress concentrators such as the surface, persistent slip bands (PSBs), interfaces of constituents in the case of composites, and grain interfaces in the case of metals. If a crack reaches a critical size, the crack will propagate suddenly, resulting in failure. A fatigue life, Nf, of a specimen (for example, of a material) may be defined as a number of stress cycles of a specified character that the specimen sustains before failure of a specified nature occurs.

A shape of an article, for example a component, may adversely affect a fatigue life thereof, by locally increasing stresses (i.e. the loading), for example above the threshold. Additionally and/or alternatively, use of a mechanical fastener in the article (i.e. a fastened article) may locally increase stresses in the article, similarly adversely affecting a fatigue life thereof. If the article is a component in an assembly, for example an aerospace component mechanically fastened in an aircraft, NOT of the component in situ (i.e. in the original place, as assembled) is difficult. For example, physical access to the component may be restricted or the component may be inaccessible, thereby limiting NOT thereof. Typically, disassembly of the assembly may be required in order to perform NDT of the component, thereby increasing complexity, duration and/or cost of the NDT, with subsequent reassembly and optionally, requalification of the assembly also required. However, disassembly may not always be possible in practice, due to operational constraints, for example. Furthermore, mechanical fasteners used in some assemblies are not reusable (i.e. single use), thus increasing cost associated with new mechanical fasteners.

Hence, there is a need to improve NDT of articles, for example components included in assemblies.

### Summary of the Invention

It is one aim of the present invention, amongst others, to provide a method of non-destructive testing which at least partially obviates or mitigates at least some of the disadvantages of the prior art, whether identified herein or elsewhere. For instance, it is an aim of embodiments of the invention to provide a method of non-destructive testing that provides detection of flaws associated with passageways in articles, for example for fasteners. For instance, it is an aim of embodiments of the invention to provide a method of non-destructive testing that provides detection of flaws associated with passageways in articles in situ.

### Detailed Description of the Invention

According to the present invention there is provided a method of non-destructive testing, as set forth in the appended claims.

### Method

A first aspect provides a method of non-destructive testing of an article having a first surface according to claim 1.

In this way, NDT of the article is facilitated, enabling NDT thereof even if physical access to the article, particularly the first passageway, is restricted. In this way, if the article is a component in an assembly, for example an aerospace component mechanically fastened in an aircraft, NOT of the article in situ (i.e. in the original place, as assembled) is facilitated such that disassembly of the assembly may not be required in order to perform NOT of the article, thereby decreasing complexity, duration and/or cost of the NDT. Furthermore, if disassembly is not required, new mechanical fasteners (i.e. to replace removed mechanical fasteners) are also not required.

### Terminology

It should be understood that terms used herein are generally according to ASTM E-1316-18a:
defect: one or more flaws whose aggregate size, shape, orientation, location, or properties do not meet specified acceptance criteria and are rejectable;
discontinuity: a lack of continuity or cohesion; an intentional or unintentional interruption in the physical structure or configuration of a material or component;
evaluation: a review, following interpretation of the indications noted, to determine whether the indications meet specified acceptance criteria;
false indication: an indication that is interpreted to be caused by a discontinuity at a location where no discontinuity exists;
flaw: an imperfection or discontinuity that may be detectable by NOT and is not necessarily rejectable;
flaw characterization: a process of quantifying a size, a shape, an orientation, a location, a growth, and/or other properties, of a flaw based on an NDT response;
imperfection: a departure of a quality characteristic from an intended condition;
indication: evidence of a discontinuity that requires interpretation to determine a significance thereof;
instrument calibration: comparison of an instrument with, or the adjustment of an instrument to, a known reference(s), which may be traceable to the National Institute of Standards and Technology (NIST), for example;
instrument standardization: adjustment of an instrument, prior to use, to an arbitrary reference value;
interpretation: determination of whether an indication is relevant or non-relevant;
non-relevant indication: an indication that is caused by a condition or type of discontinuity that is not rejectable; false indications are non-relevant;
relevant indication: an indication that is caused by a condition or type of discontinuity that requires evaluation;

### Fatigue, particularly in aerospace components

As outlined above, fatigue of components included in assemblies, particularly aerospace components included in aircraft, is particularly problematic. Fatigue is typically characterised by four phases:
Phase 1: Early fatigue damage (no visible cracks);
Phase 2: Crack initiation;
Phase 3: Crack growth;
Phase 4: Fracture.

It is desirable to identify onset of fatigue at the earliest possible phase, preferably at Phase 2 or Phase 1. Conventional NDT techniques, however, are typically only able to identify fatigue at Phase 3. It should be understood that cracks are flaws and some of the cracks may be defects, according to their aggregate size, shape, orientation, location, and/or properties, for examples.

### Fasteners, particularly for aerospace components

When a conventional mechanical fastener, for example a threaded fastener such as a bolt, is installed in an article through a passageway (i.e. a fastener hole) therein, tightening thereof results in an axial tensile strain in a shank of the mechanical fastener and a corresponding reduction in cross-sectional area of the shank. This reduction in cross-sectional area means that the shank, in use, is not radially in contact with a wall of the passageway, resulting in a loose fit. This loose fit is undesirable.

Special fasteners have been developed to eliminate this loose fit, by modifying stress and/or strain distributions in the fasteners and/or fastened article. Typically, such a special fastener includes a collar that is compressed into position. Such special fasteners include pin rivets, Taperlock fasteners, Tigue fasteners and turnlock fasteners. Taperlock fasteners are preferred.

Pin (also known as hi-shear) rivets are non-blind rivets with access to both sides required for installation. Pin rivets have the same shear strength as bolts of equal diameters, though at about only 40% weight, are faster to install. Pin rivets are may be considered as threadless bolts: the pin is headed at one end and is grooved about a circumference at the other end, around which a metal collar is swaged, effecting a firm, tight fit.

Taperlock fasteners are the strongest special fasteners used in aircraft construction. A taperlock fastener exerts a force on the tapered walls of the fastener hole (i.e. passageway) because of its tapered shape. The taperlock fastener is designed to completely fill the hole, but unlike a rivet, the tapered shank fills the tapered hole without deforming the shank. Instead, the washer head nut compresses the shank against the tapered walls of the hole. This creates radial compression in the article around the shank and axial compression in the article as the fastener is fastened. The combination of these stresses provides superior strength compared with other mechanical fasteners and may improve fatigue life. Hence, taperlock fasteners are suitable for high interference fit applications in high loaded structure junctions, particularly for restricted locations, where conventional fasteners do not fit in the space available.

A Hi-Tigue fastener has a bead that encircles the base of its shank. The bead preloads the fastener hole in which this fastener is received, resulting in increased joint strength. At installation, the bead presses against the sidewall of the hole, exerting radial force that strengthens the surrounding area. Because it is preloaded, the joint is not subjected to the constant cyclic action that normally causes a joint to become cold worked and eventually fail.

Turnlock fasteners (also known as quick opening, quick action, and stressed panel fasteners) are used to secure inspection plates, doors, and other removable panels on aircraft.

A Dzus turnlock fastener comprises a stud, grommet, and receptacle. A quarter of a turn of the stud (clockwise) locks the fastener. The fastener may be unlocked only by turning the stud counterclockwise. A Dzus key or a specially ground screwdriver locks or unlocks the fastener.

### Passageways, particularly fastener holes for fasteners

The ability to detect flaws associated with passageways, for example fastener holes, without disassembly, for example without removal of fasteners from the fastener holes, presents significant challenges to conventional NDT techniques. Aircraft wing structures, for example wing diffusion joints, are complex, multi-layered assemblies of components, coupled using mechanical fasteners. For example, fastener hole inspections, by eddy current inspection, of wing diffusion joints in Tornado aircraft requires disassembly thereof, including removal and replacement of 81 Taperlock fasteners, as described below, per wing diffusion joint, at an estimated cost of £500,000 per aircraft. Increasing the longevity of these aircraft and/or allowing operational use thereof beyond original design limits necessitates regular and/or frequent inspection, to reduce risk. Flaws associated with passageways, for example fastener holes, arising from fatigue, are typically cracks that initiate at and/or proximal a wall of the passageway and grow away therefrom, into the article. NDT of such cracks, particularly Phase 2 cracks, may be further complicated by the discontinuities presented by the wall of the passageway, for example of the fastener hole, and/or the fastener received therein.

In one example, a longitudinal axis of the first passageway is transverse, preferably orthogonal, to the first surface and optionally, the first passageway intersects with the first surface. In one example, the first passageway is a blind hole (i.e. extending from one surface, for example the first surface, partly through the article). In one example, the first passageway is a through hole (i.e. extending completely through the article, from the first surface to an opposed, second surface, for example).

In one example, the set of passageways is arranged as an array. In one example, the array is a regular array. In one example, the array is an irregular array.

In one example, a cross-sectional dimension D, preferably a diameter, of the first passageway is in a range from 1 mm to 100 mm, preferably in a range from 5 mm to 50 mm, more preferably in a range from 8 mm to 20 mm. In one example, a cross-sectional shape of the first passageway is substantially circular or circular.

In one example, a spacing between the first passageway and an adjacent passageway of the set of passageways is in a range from 0.5D to 10D, preferably 1D to 7D, more preferably 2D to 5D. In one example, a centre spacing between a centre of the first passageway and a centre of an adjacent passageway of the set of passageways is in a range from 1.5D to 11D, preferably 2D to 8D, more preferably 3D to 6D. That is, the passageways are relatively closely spaced, such that physical access to first passageway, is restricted. For example, an area of the first surface between the passageways may be relatively limited, such that scanning using a conventional single element probe, for example and as described below, would not sweep a complete volume of the article.

In one example, the first passageway comprises a cylindrical passageway and/or a frustoconical passageway (i.e. a tapered passageway, for example arranged to receive a Taperlock fastener). In one example, the first passageway comprises a threaded first passageway (i.e. having a thread formed, for example machined or cut, in a wall thereof). In one example, the first passageway comprises a spline and/or a keyway, formed, for example machined or cut, in a wall thereof. In one example, the first passageway comprises a smooth wall (i.e. surface or inner surface), having no convexities and/or concavities provided therein. It should be understood that flaws and/or defects, for example cracks, are not provided in the wall of the first passageway, for example during manufacture, but may be initiated at and/or proximal the wall of the first passageway in use, for example due to fatigue.

In one example, the first passageway is arranged to receive a mechanical fastener and optionally, the article comprises the mechanical fastener received therein. In one example, the first passageway comprises a frustoconical passageway (i.e. a tapered passageway) arranged to receive a Taperlock fastener therein and optionally, the component comprises the Taperlock fastener received therein.

In one example, the set of passageways includes N passageways, wherein N is a natural number in a range from 2 to 2,000, preferably in a range from 10 to 1,000, more preferably in a range from 20 to 200, for example 50, 100, 150. In one example, each passageway of the set of passageways is as described with respect to the first passageway.

### Phased array ultrasonic scanning

Conventional single-element probes, also known as monolithic probes, for ultrasonic scanning, emit beams in fixed directions. It should be understood that an element is typically an ultrasonic transducer. The element may comprise a single active element that both generates and receives high frequency sound waves, or two paired elements: one for transmitting and one for receiving.

To test a volume of material, a conventional single-element probe must be physically moved, for example by translating or turning, to sweep the fixed beam through the volume.

In contrast, a phased array probe for phased array ultrasonic scanning comprises a plurality of elements, which are individually pulsed in a coordinated manner. In this way, a beam emitted by the phase array probe may be focused and swept electronically without moving the phase array probe. By varying a timing of pulsing of each element, for instance by making a pulse from each successive element progressively delayed by a progressive time delay, a pattern of constructive interference is set up that results in radiating a quasi-plane ultrasonic beam at a set angle depending on the progressive time delay. In contrast to conventional single-element probes, phased array probes may be used to hence electronically sweep a sound beam through ranges of refracted angles, along linear paths, and/or dynamically focus at different depths, thus increasing flexibility and capability of testing. In this way, by changing the progressive time delay, the beam may be steered and hence swept through the volume of the material, without moving the phase array probe. Response data from multiple beams may be combined to provide an image of a slice through the material.

Phased array probes may include typically from 16 to 256 elements, arranged in a strip (linear array), a ring (annular array), a circular matrix (circular array), or a more complex shape. As with conventional single-element probes, phased array probes may be designed for direct contact use, as part of an angle beam assembly with a wedge, or for immersion use with sound coupling through a water path. Transducer frequencies are typically in a range from 2 MHz to 10 MHz (i.e. radio frequency, RF).

Typically, response data are based on time and amplitude information derived from processed RF waveforms. These waveforms and the information extracted therefrom may be typically presented in one or more of four formats: A-scans, B-scans, C-scans, or S-scans.

An A-scan is a simple RF waveform presentation showing time and amplitude of an ultrasonic signal, as commonly used with conventional single-element probes. A B-scan is an image showing a cross-sectional profile through one vertical slice of the test piece, showing the depth of reflectors with respect to their linear position. B-scan imaging requires sweeping of the beam, either by moving a conventional single-element probe in a direction or using a phase array probe, as described above, without movement thereof. A C-scan is a two dimensional presentation of response data displayed as a plan view, in which colour may represent a gated signal amplitude (i.e. response) at each (x, y) coordinate. C-scan imaging requires sweeping of the beam, either by moving a conventional single-element probe in two rastering directions or using a phase array probe, as described above, with movement in only one direction. An S-scan or sectorial scan image represents a two-dimensional cross-sectional view derived from a series of A-scans that have been plotted with respect to time delay and refracted angle. S-scan imaging requires sweeping of the beam through a series of angles to generate an approximately cone-shaped cross-sectional image.

The inventors have determined that the benefits of phased array ultrasonic scanning, over conventional single-element probe ultrasonic scanning, are particularly advantageous for NOT of flaws associated with passageways in articles, especially for in situ NDT. The benefits of phased array ultrasonic scanning result, at least in part, from use of multiple elements to steer, focus and scan beams. Beam steering (also known as sectorial scanning) may be used for mapping components at appropriate angles, thereby simplifying NOT of components having complex geometries. A small footprint (i.e. physical size) of the phased array ultrasonic probe and the ability to sweep the beam without moving the phased array ultrasonic probe also aids inspection of such components in situations where there is limited access for mechanical scanning. The ability to perform ultrasonic scanning at multiple angles significantly increases the probability of detection of anomalies (i.e. flaws). Particularly, a larger volume may be swept and/or a volume may be swept more completely compared with conventional scanning at a single angle. Electronic focusing permits optimizing the beam shape and size at the flaw location, thus further optimizing probability of detection. The ability to focus at multiple depths also improves the ability for sizing critical flaws and/or defects for volumetric inspections. Focusing can significantly improve signal-to-noise ratio in challenging applications, and electronic sweeping allows for C-Scan images to be produced very rapidly.

### Translating phased array probe in a set of directions

According to the invention, the phased array ultrasonic scanning of the first surface using the phased array probe comprises translating the phased array probe in a set of directions, including a first direction, across the first surface and optionally, wherein the set of directions includes a second direction orthogonal to the first direction. In this way, a volume of the article swept by the scanning is increased, thereby increasing probability of detecting flaws. By translating in the second direction, flaws may be scanned from orthogonal directions, thereby increasing probability of their detection, since a maximum response due to a flaw may be due, at least in part, to an orientation of the flaw.

According to the invention, the set of directions includes a third direction at angularly displaced from the first direction, for example by π/4 radians, and optionally, a fourth direction orthogonal to the third direction. In this way, a probability of detecting the flaws is increased, since a maximum response due to a flaw may be due, at least in part, to an orientation of the flaw. Hence, by increasing the number of directions of scanning, a probability of detecting the flaws is increased.

In one example, the phased array ultrasonic scanning of the first surface using the phased array probe comprises scanning around a periphery, for example a circumference i.e. through 2π radians. In one example, the phased array ultrasonic scanning of the first surface using the phased array probe comprises sweeping a volume of the article surrounding the first passageway.

In one example wherein the passageway defines a circular rim at the surface and the first direction in which the phased array probe is translated is parallel with a tangent to the rim. Particularly, the probe may moves from a first position illuminating one side of the passageway, to a second position illuminating the other side.

### Standardization and calibration

In one example, the method comprises standardizing and/or calibrating an instrument for the phased array scanning using the phased array probe. Suitable instruments include the Olympus Ominscan SX.

In one example, the method comprises standardizing and/or calibrating an instrument for the phased array scanning using the phased array probe using a reference article. In one example, the reference article comprises and/or is a replica (i.e. a copy) of at least a part of the article, having a first reference surface, wherein the reference article comprises a set of reference passageways, including a first reference passageway, and wherein respective sets of reference flaws are associated with respective reference passageways of the set of reference passageways, including a first set of reference flaws, including a first reference flaw, associated with the first reference passageway. That is, the reference article includes deliberately introduced flaws, for example by machining such as electrical discharge machining (EDM). In one example, the first reference flaw has a predetermined size, shape, orientation, location and/or property. In this way, standardizing and/or calibrating the instrument, based on the first set of reference flaws, may be improved, thereby increasing probability of detection of the first flaw and/or enhancing characterisation thereof. In one example, each reference passageway of the set of reference passageways is as described with respect to the first reference passageway. In one example, the reference article is otherwise as described with respect to the article.

### Phased array probe

In one example, the phased array probe has a nominal refracted beam angle (in steel) in a range from 0° LW to 60° LW, for example 45° LW or 60° LW.

In one example, the phased array probe has a nominal refracted beam angle (in steel) in a range from 0° SWto 60° LW, for example 45° LW or 55° LW.

In one example, the phased array probe has a sweep in a range from -30° to 70°, preferably in a range from 0° to 70°, more preferably in a range from 30° to 70°.

In one example, the phased array probe operates at a frequency in a range from 2.5 Mhz to 25 MHz, preferably in a range from 5 MHz to 12.5 MHz.

In one example, the phased array probe has a footprint in a range from 2 mm x 2 mm to 24 mm x 24 mm, preferably in a range from 8 mm x 8 mm to 16 mm x 16 mm. That is, the phased array probe may have a relatively small footprint. In this, way, the phased array probe may be moved between closely-spaced passageways, for example.

In one example, the phased array probe has a pitch and/or an elevation in a range from 2 mm x 2 mm to 24 mm x 24 mm respectively, preferably in a range from 8 mm x 8 mm to 16 mm x 16 mm respectively. That is, the phased array probe may have a relatively small pitch and/or an elevation. In this, way, the phased array probe may be moved between closely-spaced passageways, for example.

In one example, the phased array probe comprises a wedge. In one example, the wedge has an angle in a range from 15° to 60°, preferably in a range from 30° to 45°.

In one example, the method comprises operating the phased array probe according to one, preferably more than one, more preferably all operating parameters and corresponding values tabulated in Table 1.

**Table 1: Phased array probe operating parameters and values.**

| Operating parameter | Values | Preferred values |
|---|---|---|
| Beam delay | 0 µs to 20 µs | 2.5 µs to 10 µs |
| Start (half path) | -1.00 mm to +1.00 mm | -0.50 mm to +0.50 mm |
| Range (half path) | 5 mm to 100 mm | 25 mm to 75 mm |
| Acquisition rate | 10 Hz to 1 kHz | 25 Hz to 100 Hz |
| Type | PA | PA |
| Averaging factor | 0.1 to 10 | 0.5 to 2 |
| Scale type | Compression | Compression |
| Scale factor | 0.1 to 100 | 1 to 20 |
| Video filter | On | On |
| Pretrigger | 0 µs to 20 µs | 0 µs to 10 µs |
| Rectification | Full wave (FW), Half wave (HW) | FW |
| Filter | Band pass 2.0 MHz to 32 Mhz | Band pass 4.0 MHz to 16 Mhz |
| Voltage | 10 V to 200 V | 20 Vto 100 V |
| Gain | 10 dB to 100 dB | 20 dB to 50 dB |
| Mode | Pulse echo (PE) | PE |
| Wave type | Shear | Shear |
| Sound velocity | 100 ms⁻¹ to 10,000 ms⁻¹ | 1000 ms⁻¹ to 5,000 ms⁻¹ |
| Pulse width | 10 ns to 200 ns | 50 ns to 100 ns |
| Scan offset | -1.00 mm to 1.00 mm | -0.50 mm to 0.50 mm |
| Index offset | -50 mm to 50 mm | -25 mm to +25 mm |
| Probe skew | 45° to 135° | 60° to 120° |
| C-Scan time resolution | 0.1 ns to 25 ns | 1 ns to 10 ns |
| Digitizing frequency | 10 MHz to 1 GHz | 50 MHz to 250 MHz |
| A-scan time resolution | 10 ns to 250 ns | 25 ns to 100 ns |
| Gate start | I: Off; A: 1 mm to 25 mm; B: Off | I: Off; A: 5 mm to 10 mm; B: Off |
| Gate width | I: Off; A: 10 mm to 100 mm; B: Off | I: Off; A: 20 mm to 50 mm; B: Off |
| Gate threshold | I: Off; A: 5 % to 75 %; B: Off | I: Off; A: 10% to 50 %; B: Off |
| Gate synchronization | I: Off; A: Pulse; B: Off | I: Off; A: Pulse; B: Off |
| Gate peak selection | I: Off; A: Max Peak; B: Off | I: Off; A: Max Peak; B: Off |

### Flaw

In one example, the first flaw has a maximum dimension d in a range from 0.5 mm to 7 mm, preferably in a range from 1 mm to 5 mm, more preferably in a range from 1.5 mm to 3 mm. In this way, cracks may be detected at the earliest possible phase.

In one example, the method comprises characterizing the first flaw. In one example, the characterizing the first flaw comprises quantifying a size, a shape, an orientation, a location, a growth, and/or a property, of the first flaw based, at least in part, on the phased array ultrasonic scanning response.

In one example, the method comprises determining that the first flaw is and/or comprises a first defect. In one example, the determining comprises comparing a size, a shape, an orientation, a location, a growth and/or a property of the first flaw with respective predetermined acceptance criteria.

### Article

In one example, the article has a second surface, opposed to the first surface, and wherein the phased array ultrasonic scanning of the article using the phased array probe communicatively coupled thereto is only through the first surface. That is, physical access to the article, particularly the first passageway, may be restricted.

In one example, the article has a thickness, measured normal to the first surface, in a range from 1 mm to 200 mm, preferably in a range from 5 mm to 100 mm, more preferably in a range from 10 mm to 50 mm. In one example, the article comprises a multi-layered article, for example comprising a plurality of layers. Generally, interfaces between the layers are presented as discontinuities during NDT, thereby complicating the NDT of the first passageway, for example.

In one example, the method comprises stressing the article during the phased array ultrasonic scanning thereof. In one example, the stressing of the article is due, at least in part, to a mechanical fastener, for example a Taperlock fastener, received and fastened in the first passageway. In one example the stressing of the article comprises compressive stressing, for example proximal the first passageway and/or the first surface.

In one example, the article is a component, preferably an aerospace component, included in an assembly, preferably an aircraft, and wherein the phased array ultrasonic scanning of the article comprises in situ phased array ultrasonic scanning of the article included in the assembly. In this way, NDT of the component in situ (i.e. in the original place, as assembled) is facilitated such that disassembly of the assembly may not be required in order to perform NOT of the article, thereby decreasing complexity, duration and/or cost of the NDT. Furthermore, if disassembly is not required, new mechanical fasteners to replace removed mechanical fasteners are also not required. In one example, the aircraft is a fixed wing aircraft, a swept wing aircraft or a rotary wing aircraft. In one example, the article is a wing component, for example a wing diffusion joint or a lower wing diffusion joint.

### Aerospace materials

Aerospace materials are materials, typically metal alloys, developed for, or have come to prominence through, aerospace applications.

### Aerospace alloys

Typically, aerospace alloys include AI-, Mg-, Ni-, Co- and Ti-based alloys.

In Al-based alloys, Al is the predominate metal in the alloy along with alloying elements such as Cu, Zn, Mn, Si and Mg. Al-based alloys may be classified as cast and wrought alloys, both of which are subdivided into heat-treatable and non-heat-treatable categories. More than 80% of Al alloys are wrought alloys, provided in the form of rolled sheets and foils. Al-based alloys typically used in aerospace applications include 7075, 6061, 6063, 2024 and 5052 and/or L93 2014, L95 7075, L97 2024 or L115. In one example, the article comprises and/or is formed from L97 2024, for example in a T351 condition (equivalent to T4). In one example, the article and the reference article are formed of the same material, for example L97 2024 for example in a T351 condition,

### Definitions

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### Brief description of the drawings

For a better understanding of the invention, and to show how exemplary embodiments of the same may be brought into effect, reference will be made, by way of example only, to the accompanying diagrammatic Figures, in which:
Figure 1 schematically depicts a method of non-destructive testing of an article according to an exemplary embodiment;
Figure 2 shows a photograph of a method of non-destructive testing of an article according to an exemplary embodiment;
Figure 3 shows a photograph of the method, in more detail;
Figure 4A schematically depicts a cross-sectional view of a conventional fastener in an article, in use; Figure 4B schematically depicts a cross-sectional view of a taperlock fastener, in use; and Figure 4C schematically depicts a cross-sectional view of the first passageway in the article of Figure 2 for a countersunk taperlock fastener;
Figure 5 schematically depicts a phased array ultrasonic scanning signal response from a base of the first passageway in the article of Figure 2, tested according to an exemplary embodiment;
Figure 6 schematically depicts a phased array ultrasonic scanning signal response from a first flaw associated with the first passageway of Figure 5;
Figure 7 schematically depicts a plan view of the article of Figure 2, comprising a first passageway, tested according to an exemplary embodiment, in more detail;
Figure 8 schematically depicts a phased array ultrasonic scanning signal response from a second flaw associated with a second passageway in the article of Figure 2, tested according to an exemplary embodiment;
Figure 9 schematically depicts a phased array ultrasonic scanning signal response from the second flaw of Figure 8, in more detail;
Figure 10 schematically depicts an aircraft;
Figure 11 schematically depicts an aerospace component of the aircraft of Figure 10, in situ;
Figure 12A schematically depicts a plan view of an upper surface of the aerospace component of Figure 11; and Figure 12B schematically depicts a plan view of a lower surface of the aerospace component of Figure 11.

### Detailed Description of the Drawings

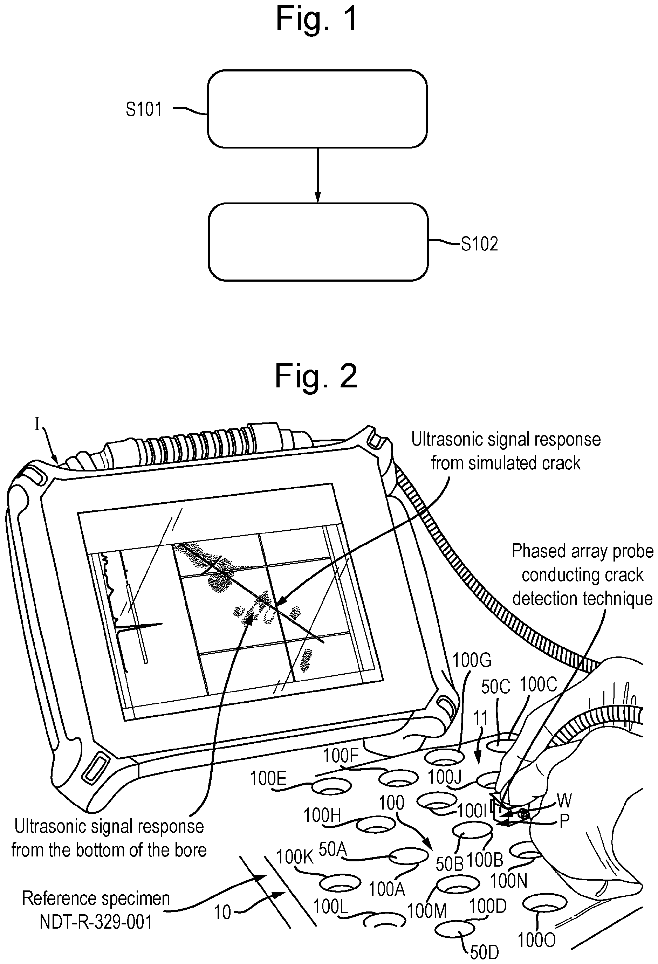

Figure 1 schematically depicts a method of non-destructive testing of an article according to an exemplary embodiment.

The article, having a first surface, comprises a set of passageways, including a first passageway. Respective sets of flaws are associated with respective passageways of the set of passageways, including a first set of flaws. The first set of flaws optionally includes a first flaw, associated with the first passageway.

At S101, the article is phased array ultrasonic scanned using a phased array probe communicatively coupled thereto through the first surface.

At S102, the first flaw, if included in the first set of flaws associated with the first passageway, is detected.

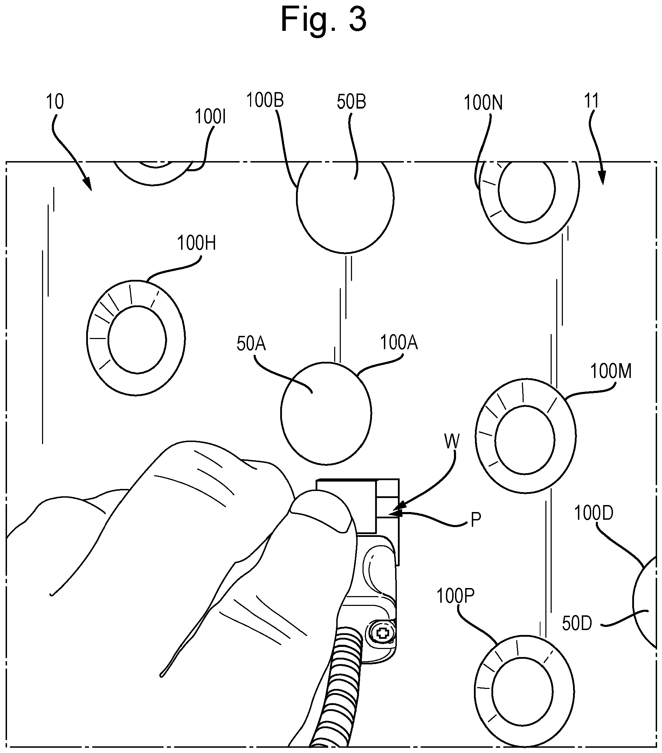

Figure 2 shows a photograph of a method of non-destructive testing of an article 10 according to an exemplary embodiment and Figure 3 shows a photograph of the method, in more detail.

The article 10, having a first surface 11, comprises a set of passageways 100, including a first passageway 100A. Respective sets of flaws 1000 (not shown) are associated with respective passageways of the set of passageways 100, including a first set of flaws 1000A (not shown). The first set of flaws 1000A optionally includes a first flaw 1000AA, associated with the first passageway 100A.

In this example, the article 10 is a reference article, comprising a replica (i.e. a copy) of at least a part of an article, particularly a wing diffusion joint 20, as described below in more detail. The reference article is formed from L97 2024 in a T351 condition, particularly plate thereof having a thickness of 20 mm. The reference article 10 has the first reference surface 11, wherein the reference article 10 comprises the set of reference passageways 100, including the first reference passageway 100A, and wherein respective sets of reference flaws 1000 are associated with respective reference passageways of the set of reference passageways 1000, including a first set of reference flaws 1000A, including a first reference flaw 1000AA, associated with the first reference passageway 100A. That is, the reference article 10 includes deliberately introduced flaws, for example by machining such as electrical discharge machining (EDM). In this example, the first reference flaw 1000AA has a predetermined size, shape, orientation, location and/or property. In this way, calibrating the instrument, based on the first set of reference flaws 1000A, may be improved, thereby increasing probability of detection of the first flaw 1000AA and/or enhancing characterisation thereof. In this example, the article is otherwise as described with respect to the reference article 10.

In this example, a longitudinal axis of the first passageway 100A is orthogonal to the first surface 11 and the first passageway 100A intersects with the first surface 11. In this example, the first passageway 100A is a through hole (i.e. extending completely through the article 10, from the first surface 11 to an opposed, second surface, for example).

In this example, the set of passageways 100 is arranged as an irregular array. That is, the set of passageways 100 are not regularly arranged such that a spacing between adjacent passageways of the set of passageways 100 varies.

In this example, a diameter D of the first passageway 100A is in a range from 11 mm to 14 mm. In this example, a cross-sectional shape of the first passageway 100A is circular.

In this example, a spacing between the first passageway 100A and an adjacent passageway of the set of passageways 100 is in a range from 2D to 5D. In this example, a centre spacing between a centre of the first passageway 100A and a centre of an adjacent passageway of the set of passageways 100 is in a range from 3D to 6D. That is, the passageways 100 are relatively closely spaced, such that physical access to first passageway 100A, is restricted.

In this example, the first passageway 100A comprises a frustoconical passageway (i.e. a tapered passageway) arranged to receive a countersunk taperlock fastener 50A therein and optionally, the article 10 comprises the taperlock fastener 50A received therein.

In this example, the set of passageways 100 includes N passageways 100A to 100T, where N is 20. The passageways 100A to 100P are shown and the passageways 100Q to 100T are not shown (obscured). In this example, the passageways 100A to 100D comprise countersunk taperlock fasteners 50A to 50D, respectively, received therein. In this example, each passageway of the set of passageways 100 is generally otherwise as described with respect to the first passageway 100A.

Particularly, the method is performed using an Olympus Ominscan SX (reference sign I), a compatible phased array probe (reference sign P) and a corresponding wedge (reference sign W) for the phased array probe.

Prior to carrying out NDT of an article, as described below, the reference article 10 including simulated cracks (EDM notches) from bores is used to check the set-up sensitivity of the instrument I and act as a good to go check.

Generally, the first surface 11 is cleaned, degreased and ensured free from corrosion. Preferably, the first surface 11 is as smooth as possible to prevent acoustic signal deformation and reduce resultant measurement error. The geometry of the scan surface 11 should be as parallel as possible to the surface of the probe shoe, to enable an optimal acoustic reflection. This will prevent difficulties in obtaining a return signal from the reflector surface. Any sharp dents, gouges, nicks, scratches or machine marking must be dressed as far as practicable to allow the ultrasonic inspection to be conducted on an acceptable surface.

A coupling medium, for example Sound Clear Soundclear^{®} 60, available from Magnaflux, or any other couplant approved by the UT Level 3, is applied to the first surface 11. Response is optimised for the first flaw 1000AA. The coupling medium is removed from the first surface following NDT.

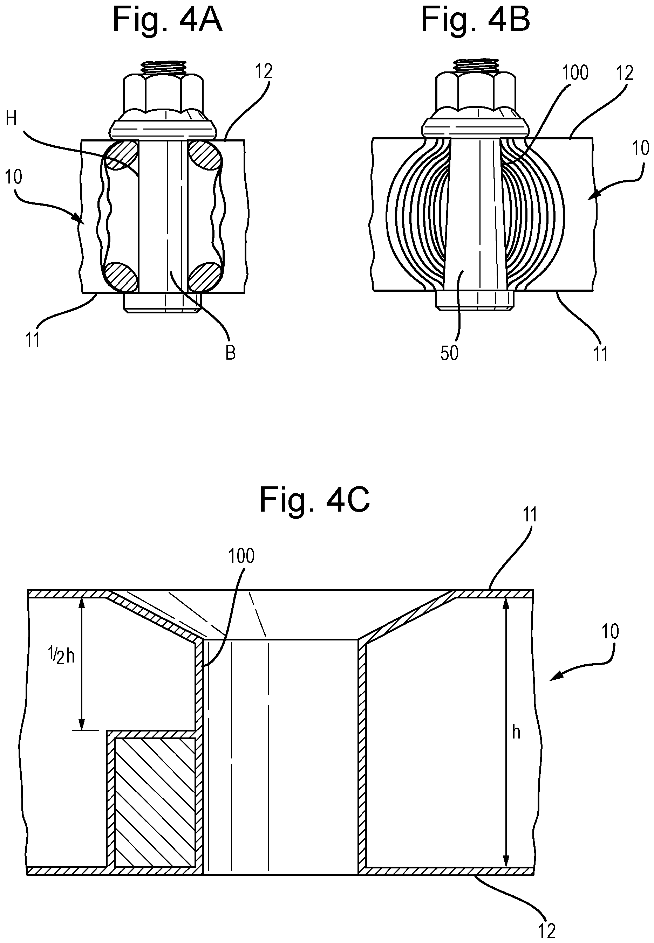

Figure 4A schematically depicts a cross-sectional view of a conventional fastener B in an article 10, in use; Figure 4B schematically depicts a cross-sectional view of a taperlock fastener 50 in an article 10, in use; and Figure 4C schematically depicts a cross-sectional view of a first passageway 100A in an article 10 for a countersunk taperlock fastener 50A.

The conventional fastener B, for example a bolt, exerts forces on the opposed first surface 11 and second surface 12 of the article 10, with stresses raised therein proximal the opposed surfaces 11, 12 around the cylindrical walls of the fastener hole H.

In contrast, as described above, the taperlock fastener 50 exerts a force on the tapered walls of the fastener hole (i.e. the first passageway 100A) because of its tapered shape. The taperlock fastener 50 is designed to completely fill the first passageway 100A, but unlike a rivet or the bolt B for example, the tapered shank fills the tapered first passageway 100A without deforming the shank. Instead, the washer head nut compresses the shank against the tapered walls of the first passageway 100A. This creates radial compression in the article 10 around the shank and axial compression in the article 10 as the taperlock fastener 50 is fastened. However, while stresses are not raised as with conventional mechanical fasteners, fatigue, corrosion and/or stress-corrosion cracking may be problematic following extended operation and/or adverse operating conditions. Hence, NDT of such articles is required.

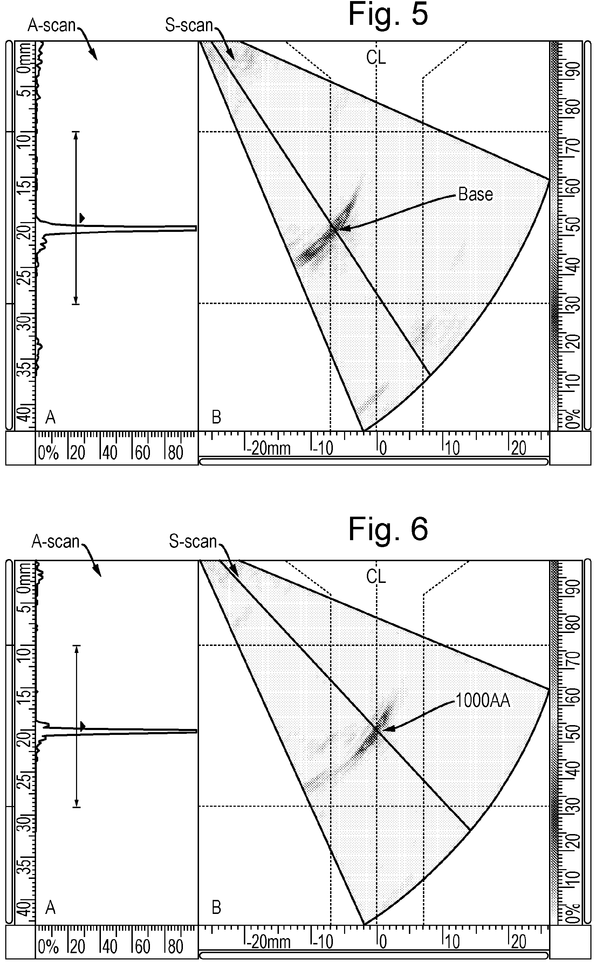

Figure 5 schematically depicts a phased array ultrasonic scanning signal response from a base of the first passageway 100A in the article 10, tested according to an exemplary embodiment.

Particularly, Figure 5 shows: (A) an A-scan; (B) an S-scan of the response due to the base of the first passageway 100A in the article 10.

Figure 6 schematically depicts a phased array ultrasonic scanning signal response from a first flaw 1000AA associated with the first passageway 100A of Figure 5.

Particularly, Figure 6 shows: (A) an A-scan; (B) an S-scan of the response due to the first flaw 1000AA associated with the first passageway 100A. The first flaw 1000AA is a notch, having dimensions 3 mm x 3 mm, deliberately introduced by EDM.

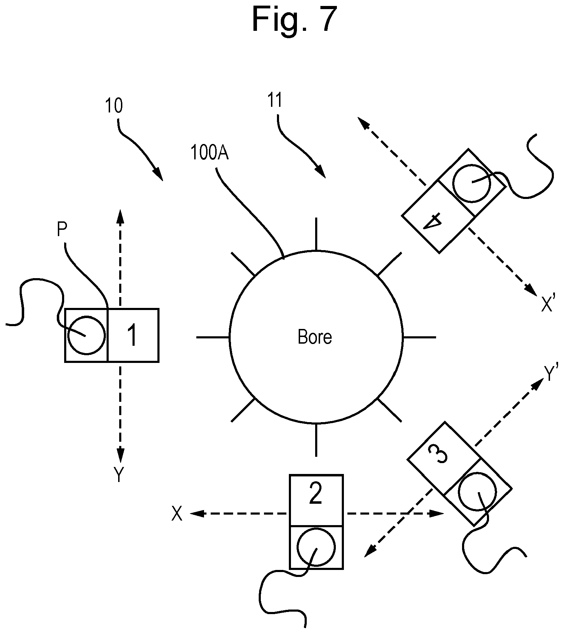

Figure 7 schematically depicts a plan view of the article 10, comprising the first passageway 100A and its associated circular rim, tested according to an exemplary embodiment, in more detail. The phased array probe P is shown in 4 positions, 1 to 4, wherein the 4 positions are mutually angularly spaced apart and equispaced from the passageway 100A.

The phased array probe P is translated in respective directions parallel to respective tangents to the passageway 100A (i.e. tangents to the circular rim). Over the course of a translation the probe moves from a first position illuminating one side of the passageway 100A to a second position illuminating the other side, thereby sequentially scanning the entire passageway 100A.

In this example, the phased array ultrasonic scanning of the first surface 11 using the phased array probe P comprises translating the phased array probe P in a set of directions, including a first direction Y, as shown at position 1, across the first surface 11. The set of directions includes a second direction X, as shown at position 2, orthogonal to the first direction Y.

In this example, the set of directions includes a third direction Y' angularly displaced from the first direction Y, as shown at position 3, by π/4 radians, and, a fourth direction X', as shown at position 4, orthogonal to the third direction Y'.

Each of directions X, Y, X' and Y' is equispaced from the passageway 100A (i.e. the line extending orthogonally from the direction to the centre of the passageway100A is the same length).

The spacing of the directions from the passageway is selected with regard to the radiation pattern of the probe. Particularly, the spacing is selected such that the beam from the phased array ultrasonic scanner tends to spread onto a sufficient range of depths of the passageway.

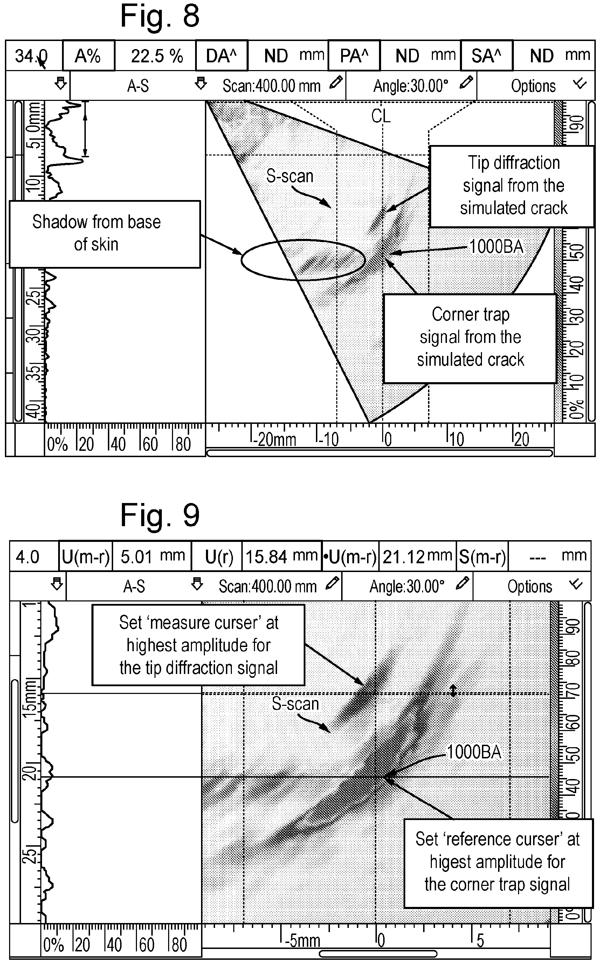

Figure 8 schematically depicts a phased array ultrasonic scanning signal response from a first flaw 1000BA associated with a second passageway 100B in the article 10, tested according to an exemplary embodiment.

Particularly, Figure 8 shows an S-scan of the response due to the first flaw 1000BA associated with the second passageway 100B.

Figure 9 schematically depicts a phased array ultrasonic scanning signal response from the first flaw 1000BA associated with the second passageway 100B in the article 10, tested according to an exemplary embodiment.

Particularly, Figure 9 shows an S-scan of the response due to the first flaw 1000BA associated with the second passageway 100B, in more detail.

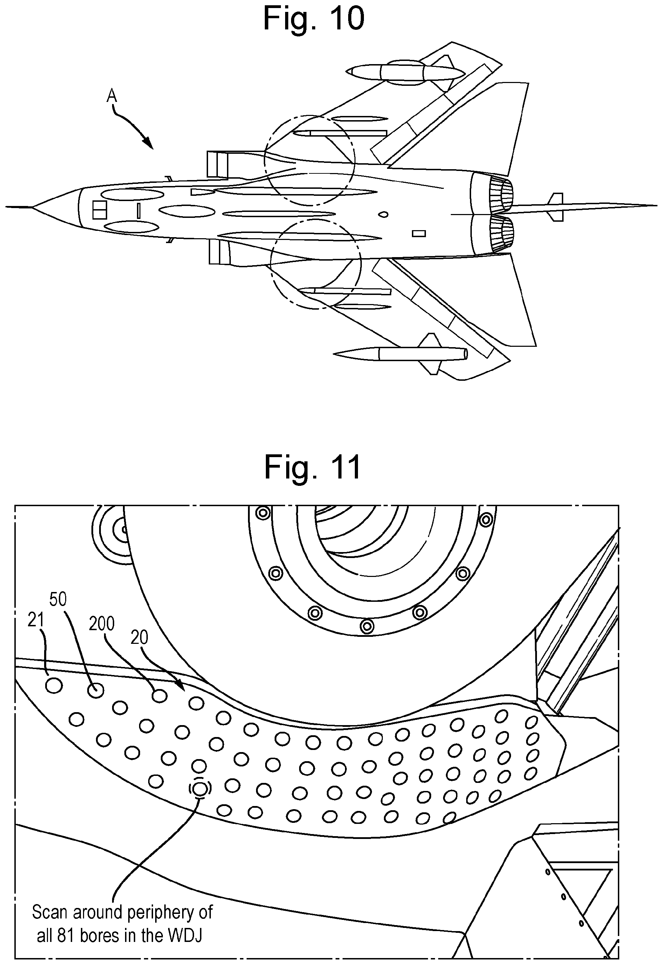

Figure 10 schematically depicts an aircraft A. In this example, the aircraft is a military aircraft, particularly a swept wing aircraft, specifically a Tornado. Regions of interest for NDT are indicated by dashed circles.

Figure 11 schematically depicts an aerospace component 20 of the aircraft A of Figure 10, in situ. Particularly, the aerospace component 20 is a wing diffusion joint, formed from L97 2024 in a T351 condition, particularly plate thereof. In this example, the article 20 is generally as described with respect to the reference article 10, description of which is not repeated, for brevity.

The article 20, having a first surface 21, comprises a set of passageways 200, including a first passageway 200A. Respective sets of flaws 2000 (not shown) are associated with respective passageways of the set of passageways 200, including a first set of flaws 2000A (not shown). The first set of flaws 2000A optionally includes a first flaw 2000AA, associated with the first passageway 200A.

In this example, the set of passageways 200 includes N passageways, where N is 81, comprising countersunk taperlock fasteners 50, respectively received therein. In this example, each passageway of the set of passageways 200 is generally otherwise as described with respect to the first passageway 200A. NDT is performed for the 81 passageways, as described above.

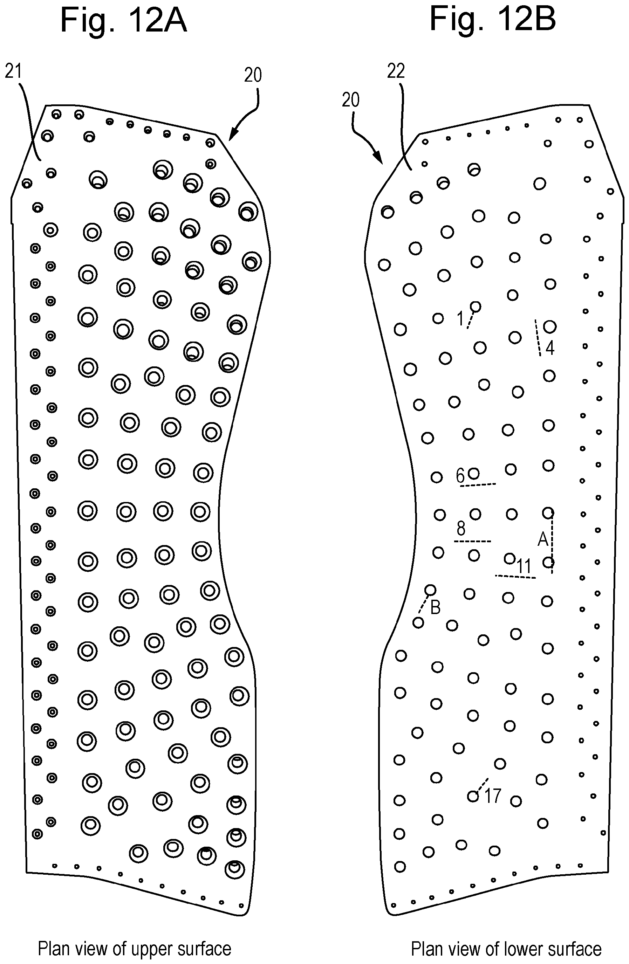

Figure 12A schematically depicts a plan view of an upper surface (i.e. the first surface 21) of the aerospace component 20 of Figure 11; and Figure 12B schematically depicts a plan view of a lower surface (i.e. a second surface 22) of the aerospace component 20 of Figure 11. The aerospace component 20 is disassembled from the aircraft A, for visual inspection of the lower surface 22.

Particularly, corrosion at or proximal the lower surface 22 may increase occurrence of flaws associated with the first set of passageways 200, for example, due to stress corrosion cracking. Hence, in situ NDT, as described herein, increases longevity of these aircraft and/or allows operational use thereof beyond original design limits without disassembly.

Although a preferred embodiment has been shown and described, it will be appreciated by those skilled in the art that various changes and modifications might be made without departing from the scope of the invention, as defined in the appended claims and as described above.

In summary, the invention provides a method of non-destructive testing and use of phased array ultrasonic scanning. In this way, NDT of the article is facilitated, enabling NDT thereof even if physical access to the article, particularly the first passageway, is restricted. In this way, if the article is a component in an assembly, for example an aerospace component mechanically fastened in an aircraft, NOT of the article in situ (i.e. in the original place, as assembled) is facilitated such that disassembly of the assembly may not be required in order to perform NOT of the article, thereby decreasing complexity, duration and/or cost of the NDT. Furthermore, if disassembly is not required, new mechanical fasteners to replace removed mechanical fasteners are also not required.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification within the scope of the appended claims.

## Claims

1. A method of non-destructive testing of an article (10) having a first surface (11), wherein the article comprises a set of passageways (100, 200), including a first passageway (100A), and wherein respective sets of flaws (1000) are associated with respective passageways (100, 200) of the set of passageways, including at least a first flaw (1000AA) associated with the first passageway, wherein the method comprises:
phased array ultrasonic scanning of the article using a phased array probe (P) communicatively coupled thereto through the first surface; and
detecting the first flaw,
wherein the phased array ultrasonic scanning of the first surface using the phased array probe comprises translating the phased array probe in a set of directions, including
a first direction (Y), across the first surface;
a second direction (X) orthogonal to the first direction; and
a third direction (Y') angularly displaced from the first direction; and
wherein a longitudinal axis of the first passageway is transverse to the first surface, and intersects with the first surface.

2. The method according to claim 1, wherein the set of directions includes a fourth direction orthogonal to the third direction.

3. The method according to any previous claim, wherein a longitudinal axis of the first passageway is orthogonal to the first surface.

4. The method according to any of the previous claims, wherein the passageway defines a circular rim at the surface and the first direction in which the phased array probe is translated is parallel with a tangent to the rim.

5. The method according to claim 4, wherein over the course of a translation, the probe moves from a first position illuminating one side of the passageway, to a second position illuminating the other side.

6. The method according to any previous claim, wherein the set of passageways is arranged as an array.

7. The method according to any previous claim, wherein a cross-sectional dimension D, preferably a diameter, of the first passageway is in a range from 1 mm to 100 mm, preferably in a range from 5 mm to 50 mm, more preferably in a range from 8 mm to 20 mm.

8. The method according to claim 7, wherein a spacing between the first passageway and an adjacent passageway of the set of passageways is in a range from 0.5D to 10D, preferably 1D to 7D, more preferably 2D to 5D.

9. The method according to any previous claim, wherein the first passageway comprises a cylindrical passageway or a frustoconical passageway.

10. The method according to any previous claim, wherein the first passageway is arranged to receive a mechanical fastener and optionally, wherein the article comprises the mechanical fastener received therein.

11. The method according to any previous claim, wherein the article has a second surface, opposed to the first surface, and wherein the phased array ultrasonic scanning of the article using the phased array probe communicatively coupled thereto is only through the first surface.

12. The method according to any previous claim, wherein the first flaw has a maximum dimension d in a range from 0.5 mm to 7 mm, preferably in a range from 1 mm to 5 mm.

13. The method according to any previous claim, wherein the article has a thickness, measured normal to the first surface, in a range from 1 mm to 200 mm, preferably in a range from 5 mm to 100 mm, more preferably in a range from 10 mm to 50 mm.

14. The method according to any previous claim, comprising stressing the article during the phased array ultrasonic scanning thereof.

15. The method according to any previous claim, wherein the article is a component, preferably an aerospace component, included in an assembly, preferably an aircraft, and wherein the phased array ultrasonic scanning of the article comprises in situ phased array ultrasonic scanning of the article included in the assembly.

## Patentansprüche

1. Verfahren zum zerstörungsfreien Prüfen eines Erzeugnisses (10), das eine erste Oberfläche (11) aufweist, wobei das Erzeugnis einen Satz von Durchgängen (100, 200) umfasst, einschließlich eines ersten Durchgangs (100A), und wobei jeweilige Sätze von Fehlern (1000) mit jeweiligen Durchgängen (100, 200) des Satzes von Durchgängen verknüpft sind, einschließlich mindestens eines ersten Fehlers (1000AA), der mit dem ersten Durchgang verknüpft ist, wobei das Verfahren umfasst:
Ultraschallabtasten mit Gruppenstrahler des Erzeugnisses unter Verwendung eines Gruppenstrahlerprüfkopfs (P), der durch die erste Oberfläche kommunikativ damit gekoppelt ist; und
Erkennen des ersten Fehlers,
wobei das Ultraschallabtasten mit Gruppenstrahler der ersten Oberfläche unter Verwendung des Gruppenstrahlerprüfkopfs ein Verschieben des Gruppenstrahlerprüfkopfs in einen Satz von Richtungen umfasst, einschließlich
einer ersten Richtung (Y) über die erste Oberfläche;
einer zweiten Richtung (X) orthogonal zu der ersten Richtung; und
einer dritten Richtung (Y'), die von der ersten Richtung winkelmäßig versetzt ist; und
wobei eine Längsachse des ersten Durchgangs quer zu der ersten Oberfläche ist, und die erste Oberfläche schneidet.

2. Verfahren nach Anspruch 1, wobei der Satz von Richtungen eine vierte Richtung einschließt, die orthogonal zu der dritten Richtung ist.

3. Verfahren nach einem der vorstehenden Ansprüche, wobei eine Längsachse des ersten Durchgangs orthogonal zu der ersten Oberfläche ist.

4. Verfahren nach einem der vorstehenden Ansprüche, wobei der Durchgang einen kreisförmigen Rand an der Oberfläche definiert und die erste Richtung, in die der Gruppenstrahlerprüfkopf verschoben wird, parallel zu einer Tangente zu dem Rand ist.

5. Verfahren nach Anspruch 4, wobei sich der Prüfkopf im Laufe einer Verschiebung von einer ersten Position, die eine Seite des Durchgangs beleuchtet, zu einer zweiten Position bewegt, die die andere Seite beleuchtet.

6. Verfahren nach einem der vorstehenden Ansprüche, wobei der Satz von Durchgängen als eine Gruppe arrangiert ist.

7. Verfahren nach einem der vorstehenden Ansprüche, wobei eine Querschnittsabmessung D, vorzugsweise ein Durchmesser, des ersten Durchgangs in einem Bereich von 1 mm bis 100 mm, vorzugsweise in einem Bereich von 5 mm bis 50 mm, mehr bevorzugt in einem Bereich von 8 mm bis 20 mm, ist.

8. Verfahren nach Anspruch 7, wobei ein Abstand zwischen dem ersten Durchgang und einem angrenzenden Durchgang des Satzes von Durchgängen in einem Bereich von 0,5 D bis 10 D, vorzugsweise 1 D bis 7 D, mehr bevorzugt 2 D bis 5 D, ist.

9. Verfahren nach einem der vorstehenden Ansprüche, wobei der erste Durchgang einen zylindrischen Durchgang oder einen kegelstumpfförmigen Durchgang umfasst.

10. Verfahren nach einem der vorstehenden Ansprüche, wobei der erste Durchgang arrangiert ist, um ein mechanisches Befestigungselement aufzunehmen, und optional, wobei das Erzeugnis das darin aufgenommene mechanische Befestigungselement umfasst.

11. Verfahren nach einem der vorstehenden Ansprüche, wobei das Erzeugnis eine zweite Oberfläche aufweist, die der ersten Oberfläche gegenüberliegt, und wobei das Ultraschallabtasten mit Gruppenstrahler des Erzeugnisses unter Verwendung des damit kommunikativ gekoppelten Gruppenstrahlerprüfkopfs nur durch die erste Oberfläche erfolgt.

12. Verfahren nach einem der vorstehenden Ansprüche, wobei der erste Fehler eine maximale Abmessung d in einem Bereich von 0,5 mm bis 7 mm, vorzugsweise in einem Bereich von 1 mm bis 5 mm, aufweist.

13. Verfahren nach einem der vorstehenden Ansprüche, wobei das Erzeugnis eine Dicke, senkrecht zu der ersten Oberfläche gemessen, in einem Bereich von 1 mm bis 200 mm, vorzugsweise in einem Bereich von 5 mm bis 100 mm, mehr bevorzugt in einem Bereich von 10 mm bis 50 mm, aufweist.

14. Verfahren nach einem der vorstehenden Ansprüche, umfassend ein Spannen des Erzeugnisses während des Ultraschallabtasten mit Gruppenstrahlers desselben.

15. Verfahren nach einem der vorstehenden Ansprüche, wobei das Erzeugnis eine Komponente ist, vorzugsweise eine Luft- und Raumfahrtkomponente, die in einer Anordnung, vorzugsweise einem Luftfahrzeug, eingeschlossen ist, und wobei das Ultraschallabtasten mit Gruppenstrahler des Erzeugnisses ein In-situ-Ultraschallabtasten mit Gruppenstrahler des in der Anordnung eingeschlossenen Erzeugnisses umfasst.

## Revendications

1. Procédé de test non destructif d'un article (10) ayant une première surface (11), dans lequel l'article comprend un ensemble de passages (100, 200), comportant un premier passage (100A), et des ensembles respectifs de défauts (1000) étant associés à des passages respectifs (100, 200) de l'ensemble de passages, comportant au moins un premier défaut (1000AA) associé au premier passage, le procédé comprenant :
le balayage par ultrasons multi-éléments de l'article, à l'aide d'une sonde (P) multi-éléments couplée en communication avec celui-ci, à travers la première surface ; et
la détection du premier défaut,
le balayage par ultrasons multi-éléments de la première surface, à l'aide de la sonde multi-éléments comprenant la translation de la sonde multi-éléments dans un ensemble de directions, comportant
une première direction (Y), à travers la première surface ;
une deuxième direction (X) orthogonale à la première direction ; et
une troisième direction (Y') angulairement décalée de la première direction ; et un axe longitudinal du premier passage étant transversal à la première surface et croisant la première surface.

2. Procédé selon la revendication 1, dans lequel l'ensemble de directions comporte une quatrième direction orthogonale à la troisième direction.

3. Procédé selon l'une quelconque des revendications précédentes, dans lequel un axe longitudinal du premier passage est orthogonal à la première surface.

4. Procédé selon l'une quelconque des revendications précédentes, dans lequel le passage définit un rebord circulaire à la surface et la première direction, dans laquelle la sonde multi-éléments est translatée, est parallèle à une tangente au rebord.

5. Procédé selon la revendication 4, dans lequel, au cours d'une translation, la sonde se déplace d'une première position éclairant un côté du passage, à une seconde position éclairant l'autre côté.

6. Procédé selon l'une quelconque des revendications précédentes, dans lequel l'ensemble de passages est agencé sous la forme d'un réseau.

7. Procédé selon l'une quelconque des revendications précédentes, dans lequel une dimension en coupe transversale D, de préférence un diamètre, du premier passage est dans une plage de 1 mm à 100 mm, de préférence dans une plage de 5 mm à 50 mm, plus préférablement dans une plage de 8 mm à 20 mm.

8. Procédé selon la revendication 7, dans lequel un espacement entre le premier passage et un passage adjacent de l'ensemble de passages est dans une plage de 0,5 D à 10 D, de préférence 1 D à 7 D, plus préférablement 2 D à 5 D.

9. Procédé selon l'une quelconque des revendications précédentes, dans lequel le premier passage comprend un passage cylindrique ou un passage tronconique.

10. Procédé selon l'une quelconque des revendications précédentes, dans lequel le premier passage est agencé pour recevoir une attache mécanique et éventuellement, l'article comprenant l'attache mécanique qui y est reçue.

11. Procédé selon l'une quelconque des revendications précédentes, dans lequel l'article a une seconde surface, opposée à la première surface, et le balayage par ultrasons multi-éléments de l'article, à l'aide de la sonde multi-éléments couplée en communication à celui-ci, se faisant uniquement à travers la première surface.

12. Procédé selon l'une quelconque des revendications précédentes, dans lequel le premier défaut a une dimension maximale d dans une plage de 0,5 mm à 7 mm, de préférence dans une plage de 1 mm à 5 mm.

13. Procédé selon l'une quelconque des revendications précédentes, dans lequel l'article a une épaisseur, mesurée perpendiculairement à la première surface, dans une plage de 1 mm à 200 mm, de préférence dans une plage de 5 mm à 100 mm, plus préférablement dans une plage de 10 mm à 50 mm.

14. Procédé selon l'une quelconque des revendications précédentes, comprenant la contrainte de l'article pendant son balayage par ultrasons multi-éléments.

15. Procédé selon l'une quelconque des revendications précédentes, dans lequel l'article est un composant, de préférence un composant aérospatial, inclus dans un assemblage, de préférence un avion, et le balayage par ultrasons multi-éléments de l'article comprend un balayage par ultrasons multi-éléments in situ de l'article inclus dans l'assemblée.
